# EUROPÄISCHE PATENTSCHRIFT

(11) **EP 2 895 352 B1**
(45) Veröffentlichungstag und Bekanntmachung des Hinweises auf die Patenterteilung: **25.05.2022**
(21) Anmeldenummer: 13765940.5
(22) Anmeldetag: 06.09.2013
(51) Int. Cl.: B60Q 3/80

(54) **VERFAHREN ZUM ERZEUGEN EINER AMBIENTEN INNENRAUMLICHTSITUATION IN EINEM KRAFTFAHRZEUGINNENRAUM**
METHOD FOR GENERATING AN AMBIENT INTERIOR LIGHTING SITUATION IN A MOTOR VEHICLE INTERIOR
PROCÉDÉ POUR GÉNÉRER UN ÉCLAIRAGE INTÉRIEUR D'AMBIANCE DANS UN HABITACLE DE VÉHICULE AUTOMOBILE

(30) Priorität: 12.09.2012 DE 102012017935
(43) Veröffentlichungstag der Anmeldung: 22.07.2015
(73) Patentinhaber: Mercedes-Benz Group AG, 70372 Stuttgart (DE)
(72) Erfinder: ROGGE, Klaus, 71063 Sindelfingen (DE)
(74) Vertreter: JENSEN & SON
(86) Internationale Anmeldenummer: PCT/EP2013/002686
(87) Internationale Veröffentlichungsnummer: WO 2014/040714

(56) Entgegenhaltungen:
- EP-A1- 2 647 519
- DE-A1-102006 009 636
- DE-A1-102008 064 022
- DE-A1-102012 002 564
- US-A1- 2010 265 731

## Beschreibung

Die Erfindung betrifft ein Verfahren zum Erzeugen einer ambienten Innenraumlichtsituation sowie ein Kraftfahrzeug, in dem ein solches Verfahren durchgeführt wird.

Innenraumbeleuchtungen sind in Kraftfahrzeugen üblich und dienen üblicherweise dazu, ein Helligkeitsniveau im Fahrzeuginneren herzustellen, das lichtintensive Aufgaben, wie etwa das Lesen einer Straßenkarte ermöglicht. So genannte Ambientebeleuchtungen stellen in der Regel ein geringeres Helligkeitsniveau bereits, das zwar keine lichtintensive Aufgaben ermöglicht, jedoch das Auffinden von Bedienelementen ermöglicht oder ein Innenraumlicht einstellt, das sich in angenehmer Weise zumindest von absoluter Dunkelheit unterscheidet.

Solche üblichen Innenraumbeleuchtungen grenzen die Insassen von den Geschehnissen der Umgebung außerhalb des Kraftfahrzeugs ab.

Die Offenlegungsschrift DE 10 2006 009 636 A1 beschreibt eine Beleuchtungseinrichtung, bei der ein Beleuchtungselement in einem Fahrgast-Innenraum in Abhängigkeit von einer Verkehrssituation wenigstens zwei unterschiedliche Farben oder zwei unterschiedliche Helligkeiten abgibt. Die Offenlegungsschrift DE 10 2012 002 564 A1 beschreibt Kraftfahrzeug und ein entsprechendes Verfahren, mit dem ein in einem Kraftfahrzeug angeordnetes Leuchtmittel in Abhängigkeit von einer Information, die ausgewählt ist unter einer Navigationsinformation, einer Zeitinformation und/oder einer Information über eine Farbe im Innenraum des Kraftfahrzeugs, angesteuert wird. Die Offenlegungsschrift US 2010/0265731 A1 beschreibt ein Beleuchtungssystem, mit dem in Innenraum eines Fahrzeugs beleuchtbar ist, beispielsweise um einen Nachthimmel darzustellen.

Aufgabe der Erfindung ist es, ein sicheres und intuitiveres Bedienen eines Kraftfahrzeugs zu ermöglichen, insbesondere eine Umgebungslichtsituation für Insassen des Kraftfahrzeugs intensiver erlebbar zu machen.

Die Erfindung ergibt sich aus den Merkmalen des Anspruchs 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein Beleuchtungssystem für einen Kraftfahrzeuginnenraum eines Kraftfahrzeugs umfasst wenigstens ein Sensormittel, mit dem eine Umgebungslichtsituation ermittelbar ist, sowie eine Beleuchtungsvorrichtung zur Beleuchtung des Kraftfahrzeuginnenraums, wobei mittels eines dem Sensormittel nachgeordneten und der Beleuchtungsvorrichtung vorgeordneten Steuermittels eine ambiente Innenraumlichtsituation in Abhängigkeit von der Umgebungslichtsituation nachstellbar ist. Dementsprechend stellt das Steuermittel durch Ansteuern der Beleuchtungsvorrichtung, das zu einer Lichtabgabe in den Kraftfahrzeuginnenraum führt, die Umgebungslichtsituation im Kraftfahrzeuginnenraum nach.

Die Umgebungslichtsituation beschreibt die visuell wahrnehmbaren Informationen, die von einer Umgebung eines Kraftfahrzeugs in dessen Innenraum gelangen und bei Blick aus einem Fenster des Kraftfahrzeugs von einem Fahrzeuginsassen im jeweils betrachteten Blickfeld theoretisch wahrgenommen werden könnten, sofern sich die Umgebung auf Höhe des Kraftfahrzeugs befindet, also die Farb- und Helligkeitswerte einer Kraftfahrzeugumgebung, etwa eines Landschaftsbildes oder Straßenbildes, das ein stehendes Kraftfahrzeug umgibt oder an einem fahrenden Kraftfahrzeug vorbeizieht. Im Rahmen bestimmter Ausführungsformen kann die Umgebungslichtsituation auch die visuell wahrnehmbaren Informationen für eine Position betreffen, die das Kraftfahrzeug erst in naheliegender Zukunft erreichen wird oder vor kurzem passiert hat, beispielsweise eine Position in bis zu Hunderten von Metern Entfernung.

Als Sensormittel kommen beliebige Lichtsensoren, Helligkeitssensoren, Farbsensoren oder Kameras in Frage. Dabei kann ein einziges Sensormittel vorliegen oder mehrere Sensormittel, die beispielsweise etwa nach Funktionalitäten getrennt Helligkeitswerte oder Farbwerte der Umgebungslichtsituation erfassen oder die Umgebung nach räumlichen Abschnitten unterteilt erfassen.

Die Beleuchtungsvorrichtung kann verschieden komplex aufgebaut sein und umfasst wenigstens ein Leuchtmittel, das Licht in den Kraftfahrzeuginnenraum abgeben kann, beispielsweise eine Glühbirne, Halogenbirne, Leuchtstoffröhre, Leuchtdiode oder organische Leuchtdiode. Einzelne Leuchtmittel können auch zu Paneelen zusammengefasst sein, über die Licht auf einer größeren Fläche abgebbar ist. Vorzugsweise liegen im Rahmen der Beleuchtungsvorrichtung mehrere Leuchtmittel vor, mit denen an einer Stelle des Kraftfahrzeuginnenraums unterschiedlichen Farbeffekte der Innenraumlichtsituation verwirklicht werden können oder Licht an unterschiedliche Bereiche des Kraftfahrzeuginnenraums abgegeben werden kann. Die Beleuchtungsvorrichtung kann weitere Komponenten umfassen, wie beispielsweise Strahlengänge, Lichtleiter oder Reflektoren, etwa zum Umleiten von Licht oder zur Verteilung von Licht auf größere Abgabeflächen. Besondere Beispiele für Beleuchtungsvorrichtungen umfassen Leuchtpaneele oder Leuchttextilien, die an einer oder mehreren Oberflächen des Kraftfahrzeuginnenraums vorliegen und Licht flächig an den Kraftfahrzeuginnenraum abgeben und somit zur Innenraumlichtsituation beitragen.

Das Steuermittel kann beliebig einfach oder komplex aufgebaut sein. In einem einfachen Fall werden beispielsweise die von den Sensormitteln erfassten visuellen Informationen in elektrische Signale umgewandelt, die für die Helligkeit und/oder den Farbwert des vom jeweiligen Sensormittel erfassten Bereichs stehen, und die Lichtabgabe wird durch das Beleuchtungssystems direkt durch diese elektrischen Signale gesteuert. In einem komplexen Fall können die visuellen Informationen der Umgebungslichtsituation durch das Steuermittel einer Bildanalyse unterzogen werden. Beispielsweise kann dadurch eine räumliche Auflösung der Umgebung und das Nachstellen von in der Umgebung befindlichen Objekten durch gezieltes Ansteuern einer Beleuchtungsvorrichtung ermöglicht werden, mit der das Abbilden solcher Objekte möglich ist, oder es können bei in Bewegung befindlichem Kraftfahrzeug oder in Bewegung befindlichen Objekten der Umgebung zukünftige oder vergangene Positionen der Umgebung oder der Objekte relativ zum Kraftfahrzeug ermittelt werden, welche die Grundlage für die Innenraumbeleuchtung darstellen.

Das Beleuchtungssystem erlaubt somit ein Nachstellen der Umgebungslichtsituation durch die Innenraumlichtsituation. Das Nachstellen der Umgebungslichtsituation durch die Innenraumlichtsituation braucht keine exakte Reproduktion zu sein. Vielmehr genügt jede Innenraumlichtsituation, die eine dominierende Helligkeit, oder eine dominierende Farbe, oder eine Helligkeits- oder Farbverteilung der Umgebung oder eines jeweils zugrunde gelegten Bereiches der Umgebung, im Innenraum oder in einem entsprechend zugrunde gelegten Bereich des Innenraums, mit geringer Annäherung reproduziert

In der Regel handelt es sich beim Nachstellen tatsächlich um ein vereinfachtes Abbilden, so dass nicht alle visuell wahrnehmbaren Information der Umgebung auch in die Innenraumlichtsituation einfließen, sondern über Helligkeitsbereiche, Farbbereiche und/oder Raumbereiche gemittelte Informationen. Fährt beispielsweise ein Kraftfahrzeug bei Nacht in einer Straße mit durch Leuchtreklamen in dominierenden Farben beleuchteten Geschäftshäuserfassaden, so kann die Innenraumlichtsituation diese Umgebungslichtsituation nachstellen. Befindet sich das Kraftfahrzeug etwa gerade in Höhe einer dominierend in weißem Licht erscheinenden Fassade, wird dies über Sensormittel erfasst, woraufhin das Steuermittel die Beleuchtungsvorrichtung so ansteuert, dass die Innenraumlichtsituation ebenfalls von weißem Licht dominiert wird. Wird die als nächstes auf der Höhe des Kraftfahrzeugs befindliche Häuserfassade von blauem Licht dominiert, so kann entsprechend nach Erfassung durch das oder die Sensormittel über das Steuermittel durch entsprechendes Ansteuern der Beleuchtungsvorrichtung eine ebenfalls von blauer Farbe dominierte Innenraumlichtsituation erzeugt werden. Bei ausreichender räumlicher Auflösung des oder der Sensormittel und entsprechend ausgeführter Beleuchtungsvorrichtung kann auch ein detaillierteres Abbilden bis hin zu einem fotorealistischen Abbilden erfolgen. Beispielsweise können einzelne Lichtquellen in der Umgebung, die zur Umgebungslichtsituation beitragen, von den Sensormitteln aufgelöst und durch die Beleuchtungsvorrichtung als einzelne Objekte wiedergegeben werden. Fährt das Kraftfahrzeug beispielsweise an einer von roter Farbe dominierten Reklamewand vorbei, vor der eine Straßenlaterne mit weißem Licht steht, so kann die Beleuchtungsvorrichtung zur Erzeugung der Innenraumlichtsituation ebenfalls rote Farben abstrahlen, in die ein weißes Objekt eingebettet ist, das mehr oder weniger abstrahiert oder detailliert dargestellt wird.

Das Beleuchtungssystem hebt somit die Isolierung zwischen Umgebung und Kraftfahrzeuginnenraum auf, indem die Umgebungslichtsituation durch die Innenraumlichtsituation nachgestellt wird. Dadurch wird vorteilhaft das Fahrerlebnis der Fahrzeuginsassen gesteigert, ebenso wie das Raumgefühl und die Wertigkeit des Interieurs des Kraftfahrzeugs.

Das Beleuchtungssystem kann ein oder wenige Leuchtmittel umfassen. Beispielsweise ist bereits durch eine einzige RGB-Leuchtdiode Licht jeder beliebigen Farbe erzeugbar und die Umgebungslichtsituation durch Wiedergabe der in der Umgebung dominierenden Farbe als Innenraumlichtsituation nachstellbar, etwa durch die in einer zentralen Position am Fahrzeughimmel angebrachte RGB-Leuchtdiode. Für eine besseres Nachstellen der Umgebungslichtsituation werden jedoch vorzugsweise mehrere Leuchtmittel eingesetzt. Gemäß einer besonderen Ausführungsform ermöglicht die Beleuchtungsvorrichtung eine Abgabe von Licht an den Kraftfahrzeuginnenraum wenigstens am Fahrzeughimmel oder an den Seitenwänden des Kraftfahrzeugs, beispielsweise an bestimmten Bereichen, die durch die Abstrahlflächen von Leuchtmitteln begrenzt werden. Insbesondere bei Verwendung von Leuchttextilien können die Abstrahlfläche großflächig sein oder die ganze für einen Insassen sichtbare Fläche umfassend, beispielsweise die Innenwand einer Fahrzeugtür. Vorzugsweise erfolgt die Abgabe sowohl am Fahrzeughimmel und an den Seitenwänden des Kraftfahrzeugs. Alternative Ausführungsformen sehen eine Lichtabgabe alternativ oder zusätzlich an weiteren Stellen des Kraftfahrzeuginnenraums vor, etwa den Rückseiten der Vordersitze, den Armlehnen oder Bereichen des Armaturenbretts oder der Mittelkonsole. Für den Fachmann ist es ersichtlich, dass ein umso genaueres Nachstellen der Umgebungslichtsituation erfolgen kann, je mehr Punkte oder Flächen zur Abgabe von Licht die Beleuchtungsvorrichtung umfasst. Vorteilhaft kann die Umgebungslichtsituation bei der Beleuchtung des Kraftfahrzeuginnenraums berücksichtigt werden, wobei vorteilhaft Fahrzeuginsassen an der Umgebungslichtsituation teilhaben können. Vorteilhaft können dadurch wichtige Reize und Informationen besser, insbesondere intuitiver wahrgenommen werden. Vorteilhaft sind ein sichereres, intuitiveres Fahren und/oder ein intensiveres Erleben der Umgebungslichtsituation möglich.

Eine nicht erfindungsgemäße Ausführungsform sieht vor, dass die Innenraumlichtsituation zeitlich synchron zur Umgebungslichtsituation nachstellbar ist. Dementsprechend würde für den Fall, dass beispielsweise eine vom einem Kraftfahrzeug gerade durchfahrene Umgebung von grünem Licht aus Leuchtreklamen und anschließend von gelbem Licht dominiert wird, diese momentane Umgebungslichtsituation sich auch durch eine Abfolge von zuerst dominierendem grünen Licht und anschließend gelben Licht in der Innenraumlichtsituation äußern.

Die erfindunggemäße Ausführungsform sieht dagegen vor, dass die Innenraumlichtsituation zeitlich versetzt zur Umgebungslichtsituation nachstellbar ist. Die Umgebungslichtsituation kann vorausschauend nachstellbar sein, wobei die Umgebungslichtsituation einer vor dem Kraftfahrzeug befindlichen Umgebung Sensormitteln bereits erfasst und im Kraftfahrzeug als Innenraumlichtsituation nachgestellt wird, bevor das Kraftfahrzeug aus diese Umgebung auf seiner Fahrroute erreicht hat. Alternativ kann erfindungsgemäß die Umgebungslichtsituation mit zeitlicher Verzögerung nachstellbar sein, so dass eine Umgebungslichtsituation, die das Kraftfahrzeug bereits hinter sich gelassen hat, verzögert die Innenraumlichtsituation nachstellt.

Die Umgebungslichtsituation kann mit verschieden Graden an räumlicher Auflösung erfassbar sein. In einem einfachen Fall wird lediglich ein über Helligkeit und/oder Farbe gemittelter Wert der gesamten Umgebung des Kraftfahrzeugs vom Sensormittel als Umgebungslichtsituation ermittelt und auf der Grundlage dieses Werts die Innenraumlichtsituation durch Ansteuern der Beleuchtungsvorrichtung erzeugt. Weitere Ausführungsformen sehen vor, dass die Umgebungslichtsituation für räumlich aufgelöste Bereiche erfasst wird, beispielsweise einem Bereich vor dem Kraftfahrzeug, einem Bereich rechts neben dem Kraftfahrzeug, einem Bereich links neben dem Kraftfahrzeug, und einen Bereich hinter dem Kraftfahrzeug, wobei in Weiterbildungen immer kleinere Bereiche aufgelöst werden können, etwa ein Bereich vorne rechts sowie ein Bereich hinten recht, die dann entsprechend differenziert in die Innenraumlichtsituation einfließen können. Gemäß einer besonderen Ausführungsform ist die Umgebungslichtsituation unter räumlicher Auflösung von Ist-Objekten beiderseits seitlich vom Kraftfahrzeug durch wenigstens ein Sensormittel erfassbar. Ein Ist-Objekt bezeichnet dabei ein Objekt, das einem Insassen des Kraftfahrzeugs aufgrund seiner Größe noch als eigenständiges Objekt auffallen würde, etwa eine Straßenlaterne, ein beleuchtetes Fenster oder eine Reklametafel, und welches durch die Beleuchtungsvorrichtung in der Innenraumlichtsituation wiedergebbar ist. Ermittelt beispielsweise ein Sensormittel eine am Kraftfahrzeug vorbeiziehende gelbe Straßenlaterne als ein Ist-Objekt einer von weißem Licht dominierten Umgebungslichtsituation, so ist die Innenraumlichtsituation unter Wiedergabe dieses Ist-Objekts nachstellbar, wenn in dem dominierend weißen Licht zeitweilig gelbes Licht auftaucht, oder insbesondere bei guter räumlicher Auflösung der Beleuchtungsvorrichtung ein mehr oder weniger stark abstrahiertes gelbes Objekt darstellbar ist.

In besonderen Weiterbildungen sind eine räumliche Auflösung der Umgebungslichtsituation und eine räumliche Auflösung beim Nachstellen der Umgebungslichtsituation durch die Innenraumlichtsituation vorgesehen, die von einer stark verpixelten Wiedergabe, also einen starken Verlust von Details, bis hin zu einer fotorealistischen Wiedergabe reicht. In einem Extremfall kann die Beleuchtungsvorrichtung beispielsweise ein LED-Bildschirm sein, der an einer Innenseitenwand des Kraftfahrzeugs vorliegt und die Szenerie wiedergibt, die an dem in Fahrt befindlichen Kraftfahrzeug vorbeizieht. Vorzugsweise werden jedoch die dominierenden Helligkeits- und/oder Farbwerte der Umgebungslichtsituation unter grober Auflösung von Ist-Objekten und deren Wiedergabe in grober Auflösung für die Innenraumlichtsituation ermittelt, so dass der Schwerpunkt der Innenraumbeleuchtung bei einer klassischen Ambientebeleuchtung liegt, bei der es mehr auf die Lichtstimmung im Raum insgesamt ankommt als auf die Wiedergabe von visuellen Informationen.

Die Erfindung betrifft ein Verfahren zum Erzeugen einer ambienten Innenraumlichtsituation in einem Kraftfahrzeuginnenraum eines Kraftfahrzeugs, umfassend ein Ermitteln einer Umgebungslichtsituation des Kraftfahrzeugs, und ein Nachführen der ambienten Innenraumlichtsituation in Abhängigkeit von der ermittelten Umgebungslichtsituation und dadurch Nachstellen der Umgebungslichtsituation. Dabei wird zum Nachstellen der Umgebungslichtsituation mittels der Innenraumlichtsituation eine dominierende Helligkeit oder eine dominierende Farbe oder eine Helligkeits- oder Farbverteilung der Umgebung oder eines jeweils zugrunde gelegten Bereiches der Umgebung im Innenraum oder in einem entsprechend zugrunde gelegten Bereich des Innenraums mit geringer Annäherung reproduziert und die Innenraumlichtsituation wird zeitlich versetzt zur Umgebungslichtsituation nachgestellt. Das Erfassen kann durch die im Rahmen des Beleuchtungssystems genannten Sensormittel erfolgen, das Nachführen und dadurch Nachstellen der Innenraumlichtsituation durch ein Steuermittel, welches eine entsprechende Beleuchtungsvorrichtung ansteuert.

Eine nicht erfindungsgemäße Ausführungsform des Verfahrens sieht vor, dass die Innenraumlichtsituation synchron zur Umgebungslichtsituation nachgestellt wird.

Wie im Rahmen des Beleuchtungssystems angesprochen, kann die Umgebungslichtsituation mit verschiedenen Graden an räumlicher Auflösung ermittelt werden. Dementsprechend wird auch gemäß einer besonderen Ausführungsform des Verfahrens eine Auflösung zugrunde gelegt, mit der Ist-Objekte der Umgebung auflösbar und mehr oder weniger abstrahiert oder verpixelt beim Nachstellen der Umgebungslichtsituation durch die Innenraumlichtsituation wiedergegeben werden.

Auf implizite Offenbarungen, die im Rahmen des Beleuchtungssystems hinsichtlich des Verfahrens gemacht wurden und umgekehrt, wird Bezug genommen. Das erfindungsgemäße Verfahren ist insbesondere geeignet zum Betreiben eines Beleuchtungssystems.

In einem weiteren Aspekt betrifft die Erfindung ein Kraftfahrzeug, das ein Beleuchtungssystem umfasst oder in dem ein erfindungsgemäßes Verfahren durchgeführt wird.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Es zeigen:
- Fig. 1: eine schematische Darstellung eines beispielhaften Beleuchtungssystems; und
- Fig. 2: ein schematisches Ablaufdiagramm eines erfindungsgemäßen Verfahrens.

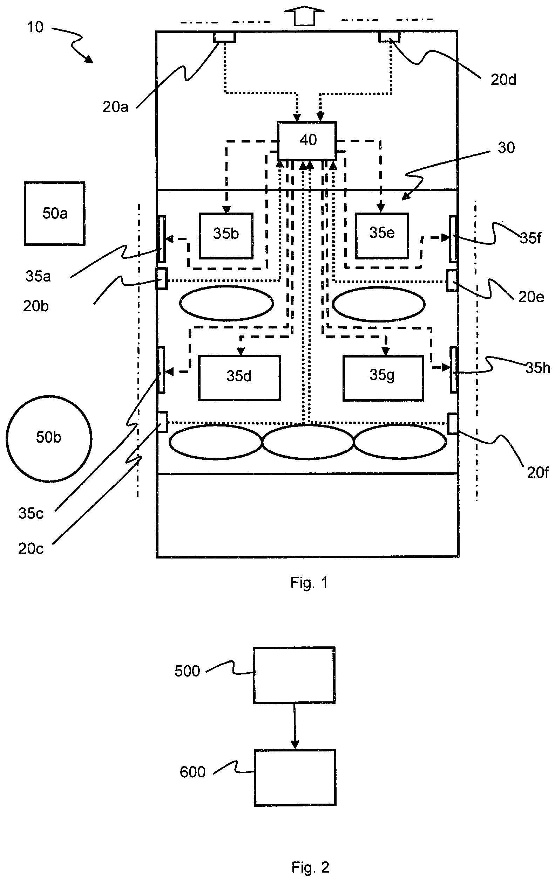

Figur 1 zeigt eine schematische Darstellung eines beispielhaften Beleuchtungssystems. In einem Kraftfahrzeug 10, von dem innerhalb des Fahrzeugsinnenraums zwei Vordersitze und drei Rückbanksitze gezeigt sind. Das Beleuchtungssystem weist mehrere Sensoren 20a, 20b, 20c, 20d, 20e und 20f auf, welche in der Fahrzeugumgebung links und rechts vor dem Kraftfahrzeug 10 (Sensoren 20a und 20d), links neben dem Kraftfahrzeug 10 in einem vorderen und einem hinteren Bereich (Sensoren 20b und 20c) sowie rechts neben dem Kraftfahrzeug 10 in einem vorderen und einem hinteren Bereich (Sensoren 20e und 20f) die Umgebungslichtsituation ermitteln. Beispielhafte Erfassungsbereiche der Sensormittel 20 sind durch Strichpunktlinien angedeutet sind. Die von den Sensormitteln 20 erfassten Daten werden über Datenverbindungen, die in Figur 1 durch Punktlinien symbolisiert sind, an ein Steuermittel 40 übertragen. Das Steuermittel 40 übermittelt Steuerbefehle über weitere, in Figur 1 als Strichlinien symbolisierte Datenverbindungen an eine Beleuchtungsvorrichtung 30, die mehrere Leuchtmittel 35a-h umfasst. Das an der Innenseite der linken Vordertür vorliegende Leuchtmittel 35a und das am Fahrzeughimmel über dem linken Vordersitz vorliegende Leuchtmittel 35b stellt hauptsächlich die Innenraumlichtsituation im Bereich des vorderen linken Fahrzeuginnenbereichs nach, die entsprechend auf der rechten Seiten vorliegenden Leuchtmittel 35e und 35f diejenige des vorderen rechten Fahrzeuginnenraumbereichs. Das an der linken Seitenwand des Fondbereichs vorliegende Leuchtmittel 35c und das am Fahrzeughimmel über dem linken Rücksitzbereich vorliegende Leuchtmittel 35d sind für die Innenraumlichtsituation im linken Fondbereich zuständig, die Leuchtmittel 35g und 35h für den rechten Fondbereich.

Ein Ist-Objekt 50a befindet sich links neben dem Kraftfahrzeugs10 auf Höhe des linken Vordersitzes. Die visuellen Informationen, die vom Ist-Objekt 50a ausgehen und in diesem Bereich zur Umgebungslichtsituation beitragen, werden vom Sensormittel 20b erfasst und entsprechende Daten an das Steuermittel 40 übermittelt. Dieses sendet Steuerbefehle an die Leuchtmittel 35a und 35b, welche Licht abgeben, um auf der Grundlage der visuellen Informationen die Umgebungslichtsituation im Kraftfahrzeuginnenraum als Innenraumlichtsituation dieses Bereichs nachzustellen, in die auch von dem Sensormittel 20a ermittelte Umgebungslichtsituation rechts vor dem Kraftfahrzeug 10 eingeht. Die Umgebungslichtsituation im Bereich des linken Fondraums wird dagegen wesentlich vom Ist-Objekt 50b bestimmt, die in diesem Bereich hauptsächlich vom Sensormittel 20c und teilweise noch vom Sensormittel 20b erfasst wird. Die entsprechenden Daten werden an das Steuermittel 40 übermittelt, welche Steuerdaten absendet, um im Wesentlichen durch die Leuchtmittel 35c und 35d die Umgebungslichtsituation des erfassten Bereichs als Innenraumlichtsituation in Bereich des linken Fondsraums nachzustellen. In der Umgebung auf der rechten Seite des Kraftfahrzeugs 10 sind keine Ist-Objekte 50 angegeben. Die Umgebungslichtsituation in diesem Bereich wird im Wesentlichen beispielsweise vom Himmel und der Erdoberfläche beziehungsweise deren Bedeckung bestimmt, von den Sensormitteln 20e und 20f ermittelt und über die Leuchtmittel 35e bis 35h als Innenraumlichtsituation nachgebildet. Aus diesen nun für Teilbereiche beschriebenen Umgebungslichtsituationen und Innenraumlichtsituationen setzen sich insgesamt eine Umgebungslichtsituation und eine Innenraumlichtsituation zusammen. Mit fortschreitender Bewegung des Kraftfahrzeugs 10 in Vorwärtsfahrtrichtung, die durch einen offenen Pfeil symbolisiert ist, wandert das Ist-Objekt 50a verstärkt in den Erfassungsbereich des Sensormittels 20c und nimmt dementsprechend verstärkt Einfluss auf die Innenraumlichtsituation im Bereich des linken Fondsbereichs. Im Falle eines zeitlich versetzten und weit vorausschauenden Nachstellens würde beispielsweise die vom Sensormittel 20a ermittelte Umgebungslichtsituation links vor dem Kraftfahrzeug 10 die Grundlage für das Ansteuern der Leuchtmittel 35a bis 35d bilden. Bei einem weniger weit vorausschauenden Nachstellen würde beispielsweise die vom Sensormittel 20b erfasste Umgebungslichtsituation die Grundlage für das Ansteuern der Leuchtmittel 35c und 35d bilden, also würde beispielsweise der Beitrag des Ist-Objekts 50a zur Umgebungslichtsituation bereits für die Innenraumsituation des linken Fondsraums berücksichtigt, während sich das Ist-Objekt 50a selbst noch auf Höhe des linken Vordersitzes befindet. Bei einem verzögerten oder rückblickenden Nachstellen würde beispielsweise der vom Sensormittel 20c erfasste Bereich der Umgebungslichtsituation, der wesentlich vom Ist-Objekt 50b beeinflusst wird, im Wesentlichen die Grundlage für die mittels der Leuchtmittel 35a und 35b nachgestellte Innenraumsituation im Bereich des linken Vordersitzes bilden.

Für den Fachmann ist es ersichtlich, dass Figur 1 nur beispielhaft ein mögliche Anzahl und Anordnung von Sensormitteln 20 und Leuchtmitteln 35 einer Beleuchtungsvorrichtung 30 sowie Datenverbindungen mit dem Steuermittel 40 wiedergibt. Der Fachmann kann somit selbstverständlich Abwandlungen vornehmen, um das gezeigte Beleuchtungssystem für Kraftfahrzeuge mit anderer Innenraumaufteilung und/oder für Beleuchtungssysteme mit abweichender Anzahl, Anordnung und/oder Funktionalität (beispielsweise Weißlicht-Leuchtmitteltn im Gegensatz zu Farblicht-Leuchtmitteln) anzupassen.

Figur 2 zeigt ein schematisches Ablaufdiagramm eines erfindungsgemäßen Verfahrens.

In einem ersten Verfahrensschritt 500 wird eine Umgebungslichtsituation des Kraftfahrzeugs 10 ermittelt, beispielweise unter Verwendung von Sensormitteln 20. In einem zweiten Verfahrensschritt 600 erfolgt ein Nachstellen der Innenraumlichtsituation in Abhängigkeit von der ermittelten Umgebungslichtsituation. Das Nachstellen erfolgt beispielsweise dadurch, dass ein Steuermittel 40 in Abhängigkeit von Daten, welche die Umgebungslichtsituation repräsentieren, Steuerbefehle an Leuchtmittel 35 einer Beleuchtungsvorrichtung 30 senden. Die Leuchtmittel 35 erzeugen auf der Grundlage der Steuerbefehle, welche beispielsweise die Helligkeit, die Farbe und/oder die Leuchtdauer des von ihnen abgegebenen Lichts kontrollieren, eine Innenraumlichtsituation, welche die Umgebungslichtsituation nachstellt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

## Patentansprüche

1. Verfahren zum Erzeugen einer ambienten Innenraumlichtsituation in einem Kraftfahrzeuginnenraum mit einer Beleuchtungsvorrichtung (30), **gekennzeichnet durch**:
- ein Ermitteln einer Umgebungslichtsituation des Kraftfahrzeugs, wobei die Umgebungslichtsituation Färb- und Helligkeitswerte einer Umgebung eines Kraftfahrzeugs umfasst,
- Nachführen der ambienten Innenraumlichtsituation durch Ansteuern der Beleuchtungsvorrichtung (30) in Abhängigkeit von der ermittelten Umgebungslichtsituation und dadurch Nachstellen der Umgebungslichtsituation, wobei
- zum Nachstellen der Umgebungslichtsituation mittels der Innenraumlichtsituation eine dominierende Helligkeit oder eine dominierende Farbe oder eine Helligkeits- oder Farbverteilung der Umgebung oder eines jeweils zugrunde gelegten Bereiches der Umgebung im Innenraum oder in einem entsprechend zugrunde gelegten Bereich des Innenraums mit geringer Annäherung reproduziert wird und
- die Innenraumlichtsituation zeitlich versetzt zur Umgebungslichtsituation nachgestellt wird.

2. Verfahren nach Anspruch 1, **gekennzeichnet durch** Wiedergabe eines Ist-Objekts der Umgebungslichtsituation beim Nachstellen der Innenraumlichtsituation.

3. Kraftfahrzeug, umfassend:
- ein Sensormittel (20), mit dem eine Umgebungslichtsituation ermittelbar ist,
- eine Beleuchtungsvorrichtung (30) zur Beleuchtung des Kraftfahrzeuginnenraums, und
- ein dem Sensormittel (20) nachgeordnetes und der Beleuchtungsvorrichtung (30) vorgeordnetes Steuermittel (40),
**dadurch gekennzeichnet, dass** die Beleuchtungsvorrichtung mit einem **Verfahren nach Anspruch 1 oder 2** angesteuert wird.

## Claims

1. Method for creating an ambient interior lighting situation in a motor vehicle interior having an illumination device (30),
**characterised by**:
- an identification of an environmental situation of the motor vehicle, the environmental situation comprising colour and brightness values of an environment of a motor vehicle,
- the tracking of the ambient interior lighting situation by actuating the illumination device (30) as a function of the identified environmental situation and thereby the redjustment of the ambient lighting situation,
wherein,
- in order to adjust the ambient lighting situation by means of the interior lighting situation, a dominating brightness or a dominating colour or a brightness or colour distribution of the environment or of a respectively taken-as-a-basis region of the environment in the interior or in an accordingly taken-as-a-basis region of the interior is reproduced with low approximation, and
- the interior lighting situation is readjusted with a time offset with respect to the ambient lighting situation.

2. Method according to claim 1
**characterised by** reproduction of an actual object of the ambient lighting situation when readjusting the interior lighting situation.

3. Motor vehicle, comprising:
- a sensor means (20) whereby an ambient lighting situation can be detected,
- an illumination device (30) for illuminating the motor vehicle interior, and
- a control means (40) subordinate to the sensor means (20) and superordinate to the illumination device (30),
**characterised in that** the illumination device is controlled using a method according to claim 1 or 2.

## Revendications

1. Procédé de génération d'une situation lumineuse intérieure d'ambiance dans un habitacle de véhicule à moteur au moyen d'un dispositif d'éclairage (30), **caractérisé par** :
- une détermination d'une situation lumineuse de l'environnement du véhicule à moteur, la situation lumineuse de l'environnement comprenant des valeurs de couleur et de luminosité d'un environnement d'un véhicule à moteur,
- mettre à jour la situation lumineuse intérieure d'ambiance par allumage du dispositif d'éclairage (30) en fonction de la situation de l'environnement déterminée et ainsi ajuster la situation lumineuse de l'environnement,
- une luminosité dominante ou une couleur dominante ou une répartition de couleur ou de luminosité de l'environnement ou d'une zone prise respectivement pour base de l'environnement dans l'habitacle ou dans une zone prise pour base correspondante de l'habitacle étant reproduite avec une faible approximation pour ajuster la situation lumineuse de l'environnement et
- la situation lumineuse de l'habitacle temporellement décalée est ajustée par rapport à la situation lumineuse de l'environnement.

2. Procédé selon la revendication 1,
**caractérisé par** la reproduction d'un objet réel de la situation lumineuse de l'environnement lors de l'ajustement de la situation lumineuse de l'habitacle.

3. Véhicule à moteur, comprenant :
- un moyen de détection (20) avec lequel il est possible de déterminer une situation lumineuse de l'environnement,
- un dispositif d'éclairage (30) servant à éclairer l'habitacle du véhicule à moteur, et
- une commande (40) disposée après le moyen de détection (20) et disposée avant le dispositif d'éclairage (30),
- **caractérisé en ce que** le dispositif d'éclairage est commandé selon un procédé selon la revendication 1 ou 2.
